# EUROPEAN PATENT SPECIFICATION

(11) **EP 1 771 090 B1**
(45) Date of publication and mention of the grant of the patent: **02.11.2016**
(21) Application number: 05733942.6
(22) Date of filing: 06.04.2005
(51) Int. Cl.: A23L 27/21, A23L 27/20, A23L 27/30, A24B 15/30

(54) **TASTE IMPROVING SUBSTANCES**
GESCHMACKSMODIFIZIERMITTEL
COMPOSÉS MODIFICATEURS DE GOÛT

(30) Priority: 20.07.2004 EP 04077101
(43) Date of publication of application: 11.04.2007
(73) Proprietor: Givaudan S.A., 1214 Vernier (CH)
(72) Inventor: VISSER, Jan, NL-1271 LB Huizen (NL); RENES, Harry, NL- 8241 LB Lelystad (NL); WINKEL, Chris, NL-1402 GL Bussum (NL); NOOMEN, Sylvia, NL-2803 DB Gouda (NL)
(74) Representative: Givaudan Patents
(86) International application number: PCT/NL2005/000257
(87) International publication number: WO 2006/009425

(56) References cited:
- EP-A- 1 252 825
- EP-A- 1 356 744
- WO-A-92/06601
- US-A- 5 780 090

## Description

### FIELD OF THE INVENTION

The present invention relates to the field of taste improvement in foodstuffs, beverages, pharmaceutics, tobacco products and oral care products. More particularly, the present invention provides flavour compositions that can be used to confer a fuller and richer taste to foodstuffs, beverages, pharmaceutics, tobacco products and oral care products. The flavour compositions according to the invention are characterised by the presence of one or more substances that are capable of improving and complementing the impact of other flavour imparting substances.

The present invention also encompasses the use of the aforementioned taste improving substances for improving the taste of foodstuffs, beverages, pharmaceutics, tobacco products and oral care products, as well as to foodstuffs, beverages, pharmaceutics, tobacco products and oral care products containing these substances.

### BACKGROUND OF THE INVENTION

"Umami" is a term commonly used to describe the taste impact of L-glutamate salts and certain nucleotides. Umami is the main taste in the Japanese stock called "dashi", and in bouillon and other stocks. Glutamic acid is an important constituent of food proteins (plant and animal) such as those abundantly found in foods such as meat, poultry, seafood and vegetables. Two nucleotides that contribute most to the umami taste, GMP (guanosine monophosphate) and IMP (inosine monophosphate) are also present in many foods. By themselves these nucleotides do not typically give as powerful a flavour result as MSG (monosodium glutamate). However, due to a synergistic interaction with MSG, a pronounced enhancing effect can be observed if these nucleotides are used in combination with MSG.

The umami taste has characteristic qualities that differentiate it from other tastes. It has been convincingly shown that umami represents the fifth taste, in addition to the other four basic tastes sweet, acid, salt and bitter. The most common descriptors that are used to describe the umami taste include "savoury", "meaty" and "broth-like". "Umami" is literally translated as "delicious".

As alternatives to MSG and 5'-nucleotides, other molecules have been proposed as taste modifying substances:
Organic acids like tartaric and succinic acid have been reported to exhibit taste enhancing properties (Ney [1971] Z. Lebensm. Unters. Forsch. 146: 141; Velisek et al. [1978] Nahrung 22: 735). Taste modifying properties have also been attributed to certain di- to octapeptides (Yamasaki and Maekawa [1978] Agric. Biol. Chem. 42: 1761; Noguchi et al. [1975] J. Agric. Food Chem. 23: 49).

WO 97/04667 discloses tripeptides containing a hydrophobic amino acid residue and at least one acidic amino acid residue as well as N-lactoyl-X substances, wherein X represents an amino acid residue, as flavouring ingredients to impart savoury taste and increase the mouthfeel of foodstuffs. It is also disclosed that these peptides and derivatives can partly mimic organoleptic features of MSG.

EP-A 1 252 825 discloses flavouring compositions for imparting umami taste to food products comprising substances that are formed by the reaction of the primary or secondary amino group of an amino acid, peptide or protein with the carbonyl group of a reducing sugar. According to this document the most preferred substances are those wherein the amino acid residue is selected from glutamic acid or aspartic acid and the sugar residue is selected from fructose, glucose, maltose, lactose, galactose, rhamnose, xylose and mannose.

EP-A 1 356 744 discloses flavouring compositions containing N-acetylglycine and the use thereof for imparting umami taste to foodstuffs.

As described above umami taste and umami imparting substances contribute to the flavour of foodstuffs, especially in the savoury range.

In sweet and beverage products, further examples of the importance of the gustative dimension of flavourings have been reported. These examples include taste attributes such as bitterness, tingling and cooling-freshness.

Bitterness is an essential aspect of some food flavours, among which chocolate taste. Purine alkaloids, like theobromine and caffeine, as well as amino acids and peptides have been known for a long time as bitter substances. In British patent no. GB 1420909 it is disclosed that the bitter flavour of cocoa can be reproduced using a combination of a purine alkaloid and an amino acid or an oligopeptide which 'produces a surpringly more natural simultaneously bitter and astringent flavour note than either of these types of substances alone'.

Menthol, an important constituent of peppermint oil, has a strong impact on flavoured products not only because of its mint smell but also because it imparts a cooling and fresh taste. Next to mint flavoured products, it has been suggested to employ menthol in other types of flavour to impart a cool taste. US patent application no. US2005013846 for example discloses how menthol and derivatives thereof can be used as flavouring in water continuous spreadable acidified food products to obtain table spreads exhibiting a fresh, cool taste impression.

Similarly, cinnamic aldehyde and eugenol, constituents of cinnamon oil, are used in flavouring composition for confectionary products, not only for their smell but also because they impart a warm and tingling taste. The oral pungency of cinnamic aldehyde was described as burning and tingling by Cliff M and Heymann H [ Journal of Sensory Studies 7 (1992)279-290]. According to the same authors eugenol exhibits a long-lasting numbing effect. Cinnamon oil has been proposed as a taste improving flavouring. International patent application no. WO9006689 discloses that cinnamon oil, among other spice extracts, added to a minty flavour formulation, can be used to improve the long-lasting flavour of chewing-gum.

Although a lot of work has been focused on finding taste improving substances that are capable of imparting new exciting taste attributes, there still is a need for new taste improving substances that are suitable for use in both savoury and non-savoury applications.

### SUMMARY OF THE INVENTION

The present inventors have surprisingly found that the substances according to formula (I) and edible salts thereof can be used advantageously to improve the taste of foodstuffs, beverages, pharmaceutics, tobacco products and oral care products:

(I) CH₂OH-(CHOH)₄-CO-NH-CH₂-CH₂-O-X

It was found that these taste improving substances are particularly useful in a wide variety of applications including savoury food, such as soups and sauces, non-savoury food, such as dairy, beverages and confectionery, as well as pharmaceutics, tobacco products and oral care products.

The taste improving substances according to the present invention can be applied advantageously to impart desirable taste attributes to the aforementioned products. In addition, the present taste improving substances are capable of modifying the taste impact of other flavour ingredients contained within these same products, thereby improving the overall flavour quality of these products.

WO 92/06601 discloses certain amide based, non-caloric sugar substitutes derived from sugar carboxylic acids and amino alcohols, which possess similar physical rheological and colligative properties to sucrose. These substances may be used as sugar substitutes for formulated foods such as confectioneries, beverages, bakery products and the like, in order to simulate the structure, texture, freezing point depression, moisture retention, density, water solubility, solution viscosity properties, stability, non-reactivity and appearance characteristics of sucrose. Optionally these sugar substitutes may be used in combination with a high potency (artificial) sweetener, typical proportions thereof ranging from about 0.2 to 2.0 parts of sweetener per 100 parts of the sugar substitute. WO 92/06601 discloses a foodstuff (yellow cake) comprising 28.3 wt% of the sugar substitute.

The present invention also relates to flavour compositions, foodstuffs, beverages, pharmaceutics, tobacco products and oral care products comprising one or more substances according to formula (I) and edible salts thereof.

Other aspects of the present invention relate to the use of these substances for improving the taste of foodstuffs, beverages, pharmaceutics, tobacco products and oral care products.

### DETAILED DESCRIPTION OF THE INVENTION

Accordingly, a first aspect of the present invention relates to a flavour composition comprising:
a. at least 0.1 wt.% of one or more flavouring substances, optionally including saccharide sweetener in an amount of 0-20% by weight of the composition and/or artificial sweetener in an amount of 0-3 % by weight of the composition; and
b. between 0.001 and 95 wt.% of one or more taste improving substances selected from the group consisting of:
   substances according to formula (I):

      (I) CH₂OH-(CHOH)₄-CO-NH-CH₂-CH₂-X

      wherein X represents -OH, -O(CO)R, -OPO₃H₂" -PO₃H₂, -OSO₃H or -SO₃H, and R represents a C₂-C₁₀ group comprising at least one carboxylic acid group; and edible salts thereof,
   wherein, in case the flavour composition contains N-gluconyl ethanolamine or a salt thereof, the weight ratio of the taste improving substances and the flavouring substances is less than 50:1.

Throughout this document the term "flavouring substance" encompasses any substance that is capable of imparting a detectable flavour impact, especially at a concentration below 0.1 wt.%, more preferably below 0.01 wt.%, as well as sweeteners, including saccharide sweeteners and artificial sweeteners.

The term "saccharide sweetener" as used in here refers to sweeteners that contain one or more saccharide units and that exhibit a sweetness potency that is of the same order of magnitude as the sweetness potency of sucrose. Typically, the sweetness potency of such saccharide sweeteners is between 20% and 500% the sweetness potency of sucrose.

The term "artificial sweetener" is used in here to refer to sweeteners that have a much higher sweetener potency than sucrose, especially a sweetness potency that exceeds the sweetness potency of sucrose by at least a factor 10, preferably by at least a factor 20.

Throughout this document the terms "taste" and "flavour" are used interchangeably to describe the sensory impact that is perceived via the mouth, especially the tongue, and the olfactory epithelium in the nasal cavity. The term "taste modifying" as used herein refers to the capability of a composition or substance to alter the taste impact of other, flavour imparting, substances present within the same product, with the proviso that this change in taste impact is not caused by the flavour contribution of said composition or substance *per se,* but instead that it mainly results from the combined effect of on the one hand the taste improving composition or substance and on the other hand the other flavour imparting substances. The present substances combine the capability of modifying the taste of other flavour substances with a taste contribution of their own. The favourable impact of the present taste improving substances is believed to be the result of the combination of these two effects.

Preferably, the flavour composition according to the invention contains at least 0.1 wt.% of the taste improving substances as defined above. Typically, the amount of the taste improving substances does not exceed 90 wt.%, preferably it does not exceed 40 wt.%, even more preferably the flavour composition comprises less than 25 wt% of the taste improving substance, most preferably less than 5 wt%.

In a preferred embodiment the flavour composition according to the invention comprises flavouring substances in an amount of at least 0.5 wt.%, preferably at least 1 wt.%, based on the total weight of the composition. Preferably, the amount of flavouring substances does not exceed 95 wt%, more preferably it does not exceed 50 wt%.

Preferably, in the present flavour composition the taste improving substances and flavouring substances as defined herein before are employed in a weight ratio of less than 50:1, preferably less than 20:1. In a preferred embodiment said weight ratio is within the range of 1:100 to 10:1, more preferably within the range of 1:50 to 5:1. Most preferably, the taste improving substances and flavouring substances are employed in a weight ratio that does not exceed 1:1.

In case the flavouring composition comprises N-gluconyl ethanolamine and artificial sweetener, the weight ratio of N-gluconyl ethanolamine and artificial sweetener is less than 50:1, more preferably less than 20:1.

The flavour composition according to the present invention may suitably be prepared in the form of a liquid, a paste or a powder. In a particularly preferred embodiment the flavour composition is a free flowing powder.

In a preferred embodiment, the present flavouring composition is selected from the group consisting of dairy flavourings (e.g. butter and milk flavourings), fruit flavourings (e.g. citrus and red fruit flavourings), savoury flavourings (e.g. meat and cheese flavourings) and bread flavourings.

Preferably, in the aforementioned formula (I) X represents a hydroxyl group, a phosphate group, a phosphonate group, a sulfate group or a sulfonate group. Even more preferably, X represents a hydroxyl group, a phosphate group or a phosphonate group. Most preferably, X represents a hydroxyl or a phosphate group. Taste improving substances according to the invention in which X represents a hydroxyl group are particularly suitable for use in dairy flavourings and fruit flavourings as these taste improving substances are particularly effective in improving and complementing aspects of sweet taste. Taste improving substances in which X represents a phosphate group were found to be particularly suitable for use in savoury flavourings and bread flavourings.

In formula (I) the CH₂OH-(CHOH)₄-CO- moiety preferably represents an aldonic acid residue selected from the group of allonic acid, altronic acid, gluconic acid, mannonic acid, gulonic acid, idonic acid, galactonic acid and talonic acid. Even more preferably said moiety represents the residue of gluconic acid or mannonic acid.

Another aspect of the present invention relates to substances according to aforementioned formula (I), wherein X represents -O(CO)R, -OPO₃H₂, -PO₃H₂, -OSO₃H or-SO₃H, and R represents a C₂-C₁₀ group comprising at least one carboxylic acid group, more preferably a C₂-C₇ group comprising one carboxylic acid group; and edible salts thereof.

In one embodiment the invention encompasses substances according to formula (I) wherein X represents a hydroxyl group and the CH₂OH-(CHOH)₄-CO- moiety represents a residue of an aldonic acid selected from allonic acid, altronic acid, mannonic acid, gulonic acid, idonic acid, galactonic acid and talonic acid. As explained herein before, the taste improving substances according to this embodiment are particularly suitable for use in dairy flavours and fruit flavours.

In another embodiment X represents a phosphate group, a phosphonate group, a sulfate group or a sulfonate group, the CH₂OH-(CHOH)₄-CO- moiety preferably representing a residue of an aldonic acid selected from gluconic acid and mannonic acid. The taste improving substances according this particular embodiment are beneficially employed in savoury flavours and bread flavours.

In a particularly preferred embodiment the substance according to formula (I) is a gluconic acid derivative of ethanolamine phosphate, which according to IUPAC rules for nomenclature should be referred to as N-gluconyl ethanolamine phosphate, or an edible salt thereof.

Yet another aspect of the present invention relates to the use for improving the taste of foodstuffs, beverages, pharmaceutics, tobacco products or oral care products of one or more taste improving substances selected from the group of substances according to formula (I) and edible salts thereof. In a particularly preferred embodiment the present invention relates to the use of one or more substances selected from N-gluconyl ethanolamine, N-gluconyl ethanolamine phosphate and edible salts thereof, for improving the taste of foodstuffs, beverages, pharmaceutics, tobacco products or oral care products.

The inventors have found that the present taste improving substances are very useful ingredients which, in the presence of other flavouring substances, are capable of imparting highly appreciated taste sensations to the products in which they are incorporated, specifically "roundness", "fullness", "substance", "continuity", "ginger-like", "tingling", "fatty", "metallic", "umami" and/or "bitter". Because of this, the present taste improving substances can be employed to improve the taste of foodstuffs, beverages, pharmaceutics, tobacco products and oral care products. The taste improving substances of the present invention as such are capable of imparting highly desirable taste attributes. In addition, it has been found that the taste improving substances according to the invention are capable of modifying and complementing the sensory impact of flavouring substances contained in the aforementioned products. The present taste improving substances are particularly effective in improving the taste of products in which they are incorporated if said products comprise one or more other flavouring substances as well as a significant amount of fat, e.g. at least 0.1 wt.% fat or even at least 1 wt.% fat.

Because the taste improving substances according to the invention are not particularly volatile, they do not produce a strong aroma impact, even though they can affect the aroma impact of other flavour substances. Here the term "aroma" refers to the aspect of taste that is perceived through the olfactory epithelium. Because of the low volatility of the present taste improving substances it is believed that the advantageous properties of these substances are somehow associated with the impact that these substances have on the sensory receptors located within the mouth.

More in particular, the present taste improving substances, especially those that comprise a non-derivatised ethanolamine residue, were found to be useful for improving and complementing taste impact in sweet products, including beverages and dairy products. A suitable example thereof includes "masking of bitter taste" in said products. The present inventors furthermore found that the present taste improving substances are very useful ingredients for imparting and complementing a taste-sensation described as "creamy" and/or "fatty" in products, especially sweetened products, containing a certain minimum amount of fat. It is noted that, according to the present use, these effects on creamy and/or fatty taste sensation are not accompanied by a significant effect on the relevant physical parameters, such as viscosity and structure, of the products. Additionally, the present taste improving substances, especially those that contain a phosphate residue, were found to be particularly useful for imparting and complementing 'salty taste impact' in salt containing products.

As mentioned herein before, WO 92/06601 describes ingredients that, because of the physical properties thereof, could be used to completely replace sucrose as a structuring and/or texturizing agent in sweetened foodstuffs such as confectionery products, bakery products and beverages. One of the substances described in this document is N-gluconyl ethanolamine. In order to fulfil its function the 'structuring agents' have to be used in major amounts in food applications. For example, WO 92/06601 describes a yellow cake comprising 28.3 wt% of said structuring agent. With regard to taste characteristics, WO 92/06601 only mentions that the structuring agents disclosed therein, have a sweetness potency corresponding to 0 - 100 % of that of sucrose, and that, in order to accomplish the same final effect as sucrose in formulated foods, an amount of artificial high potency sweetener might be included in proportions ranging between 0.2 - 2.0 parts of sweetener per 100 parts of the structuring agent.

The use of N-gluconyl ethanolamine according to the present invention differs from this disclosure in that it is used only in minor amounts in order to impart a taste improving effect in combination with other (volatile) flavour substances. As mentioned before, at the levels at which N-gluconyl ethanolamine according to the invention is typically applied in foodstuffs, beverages, pharmaceutics and oral care products, the contribution thereof on structure and texture, i.e. on the physical properties, is essentially insignificant.

Yet another aspect of the present invention relates to a product selected from the group consisting of foodstuffs, beverages, pharmaceutics, tobacco products and oral care products, said product comprising between 0.1 and 10,000 ppm (mg/kg) of one or more taste improving substances selected from the group consisting of substances according to formula (I) and edible salts thereof. More preferably, the product contains at least 1 ppm, most preferably at least 5 ppm of the one or more taste improving substances. Typically, the aforementioned products contain the taste improving substances in a concentration of not more than 5,000 ppm, preferably of not more than 2,000 ppm. The present products may further comprise one or more other flavouring substances, typically in amounts of 5-20,000 ppm, more preferably 10-10,000 ppm.

The present products comprising N-gluconyl ethanolamine or a salt thereof preferably exhibit a weight ratio of taste improving substances and other flavouring substances of less than 50:1, preferably less than 10:1.

In one embodiment, the present product contains no N-gluconyl ethanolamine and/or an edible salt thereof.

In another embodiment, the present product does not contain added saccharide sweetener or artificial sweetener.

In yet another embodiment, the product contains N-gluconyl ethanolamine and/or an edible salt thereof in combination with added sweetener, said product being characterised by the fact that the weight ratio of the taste improving substances and saccharide sweetener does not exceed 1:1, preferably does not exceed 1:2; and by the fact that the weight ratio of the taste improving substances and artificial sweetener is less than 50:1, preferably less than 10:1, even more preferably less than 1:1.

Typical examples of foodstuffs according to the present invention include yoghurt, ice cream, desserts, confectioneries, bakery products, sweet snacks, seasonings, sauces, stock, soups and dressings. The benefits of the present invention may also be realised in beverages, in oral care products such as toothpaste and mouthwash, in pharmaceutics such as pills and elixirs and in tobacco products, which includes any type of tobacco product for smoking as well as for non-smoking applications. It is noted that tobacco-like products are available for both smoking and non-smoking applications. The use of the present taste improving substances in these tobacco substitutes is also encompassed by the present invention.

As mentioned herein before, the taste effect of the present taste improving substances is particularly evident in products comprising a certain amount of fat. Therefore, a preferred embodiment relates to products, as described here above, comprising one or more of the present taste improving substances, one or more flavouring substances and additionally at least 0.1 wt.% fat, based on the total weight of the product. Even more preferably, the product contains at least 1 wt.% fat. Typical examples of such products include ice cream, desserts, spreads, snacks, soups, sauces and cheese products.

Yet another aspect the present invention relates to a process of improving the taste of a foodstuff, a beverage, a pharmaceutical product, a tobacco product or an oral care product, comprising adding to said product one or more taste improving substances selected from the group consisting of substances according to formula (I) and edible salts thereof.

Substances according to formula (I) are suitably produced by reacting an aldonolactone with ethanolamine or a derivative thereof.

N-gluconyl ethanolamine is suitably produced by reacting gluconic acid or gluconolactone or a salt thereof with ethanolamine. N-gluconyl ethanolaminephosphate is suitably produced by reacting gluconic acid or gluconolactone or a salt thereof with 2-aminoethylmonophosphate.

In the reactions described here above also derivatives of ethanolamine or ethanolamine phosphate with a polyester of the aldonic acid may be formed. Said aldonic acid polyesters may comprise several aldonic acid units, typically 2-5. Another embodiment of the invention relates to these substances and their use as taste improving substances.

The invention is further illustrated by means of the following examples

### EXAMPLES

### Example 1

175 g of gluconic acid (50 % aqueous solution) was mixed with 25 g of ethanolamine. First the water was removed and subsequently the mixture was reacted at 120 °C for 4 hours. The mixture was washed with isopropyl alcohol (1 x 900 ml, 2 x 600 ml). The residue was diluted with 200 ml of water and the pH was adjusted to 5.5 with 50% NaOH. 400 g of maltodextrin MD10 and 200 g of salt were added and the total mixture was spray-dried. The spray-dried sample was stored as such until tasting

### Example 2

40 g of gluconolactone and 13.6 g of ethanolamine were mixed with 500 g of methanol and the mixture was heated to reflux during 5 hours. The mixture was left at room temperature overnight. The mixture was then cooled at - 20 °C for three hours. A white precipitate was formed and was isolated by filtration. The solid was dried *in vacuo* at 60 °C. 34.7 g of product was obtained (yield: 64%). NMR spectroscopy showed that the product contained more than 90 wt.% N-gluconyl ethanolamine.

### Example 3

2-Aminoethyl dihydrogen phosphate (10 g / 0.07 mol), gluconolactone (13.4 g / 0.07 mol) and triethylamine (6.9 g / 0.07 mol) were combined in 50 g of glycerol. The mixture was stirred at 60 °C during approx. 18 hours. The mixture was poured into 150 ml of isopropanol (IPA) and stirred. First a gel like precipitate was formed, after stirring with 150 ml of extra IPA the material became more paste-like. The paste was washed three times with 300 ml of IPA and once with 300 ml of ethyl acetate. The paste was then dissolved in water and all solvents were removed *in vacuo* at 30 °C. 25 g of product was obtained. NMR spectroscopy showed that the product contained 10 % of the desired product, N-gluconyl ethanolamine phosphate.

### Example 4

Four yoghurt samples were prepared:
A: Yoghurt 0% fat + strawberry flavour + sucralose (25%) 300 ppm
B: Yoghurt 0% fat + strawberry flavour + sucralose (25%) 300 ppm + 10 ppm N-gluconyl ethanolamine (as prepared in Example 2)
C: Yoghurt 0% fat + strawberry flavour + 4% sugar
D: Yoghurt 0% fat + strawberry flavour + 4% sugar + 10 ppm N-gluconyl ethanolamine (as prepared in Example 2)

The yoghurts were tasted by a professional panel. There was general agreement among the group on the taste descriptions:
A : sweet, bitter, metallic, aftertaste.
B : fuller more round and natural taste, more sugar sweetness, significantly less bitter metallic aftertaste
C : tart, acidic
D : fuller more round and natural taste, more intense sweet.

### Example 5

Two yoghurt samples were prepared:
A: Yoghurt 3% fat + strawberry flavour + 4% sugar
B: Yoghurt 3% fat + strawberry flavour + 4% sugar + 10 ppm N-gluconyl ethanolamine (as prepared in Example 2)

The yoghurts were tasted by a professional panel. There was general agreement among the group on the taste descriptions:
A : tart, acidic
B : much fuller, more fatty, more round and natural taste, more intense sweet.

### Example 6

Two ice cream (8% vegetable fat) samples were prepared:
A: Ice cream + strawberry flavour
B: Ice cream + strawberry flavour + 10 ppm N-gluconyl ethanolamine (as prepared in Example 2)

The ice creams were tasted by a professional panel. There was general agreement among the group on the taste descriptions:
A : sweet, strawberry, creamy aftertaste.
B : fuller, more round and natural taste, enhanced sweetness and creaminess

| Ice cream composition: | % |
|---|---|
| Hydrogenated coconut fat (CN32) | 8.00 |
| Skimmed milkpowder | 7.00 |
| Whey protein concentrate | 3.00 |
| Sucrose | 12.00 |
| Corn syrup solids (DE39) | 5.00 |
| Sherex IC 9328 | 0.50 |
| Flavour | + |
| Colour | + |
| Water | Up to 100 |

### Example 7

Three still beverages were prepared:
A: Tap water with sucrose (7 brix) and 1.5 g/l of citric acid + lemon flavour
B: Tap water with sucrose (6.2 brix) and 1.5 g/l of citric acid + lemon flavour
C: Tap water with sucrose (6.2 brix) + lemon flavour + N-gluconyl ethanolamine 30 ppm (as prepared in Example 2)

The beverages were tasted by a professional panel. There was general agreement among the group on the taste descriptions:
A: sweet
B: empty, less sweet
C: fuller, more round and natural taste, more intense sweet taste than B

### Example 8

A standard chicken soup was prepared. The quantity was split in two and to one half 7 ppm of N-gluconyl ethanolamine, as prepared in example 2, was added. The soups were tasted by a professional panel.

The soup containing the N-gluconyl ethanolamine was unanimously described as more tasteful, more complete, more body, more fatty.

### Example 9

Three different tomato soup powder compositions were prepared by dry mixing the ingredients as given in table 2.

**Table 2**

| Ingredients | A (Control) | B (50% Reduced salt) | C (Improved version) |
|---|---|---|---|
| Potato starch | 16.9 (g) | 16.9 (g) | 16.9 (g) |
| Tomato powder | 35 (g) | 35 (g) | 35 (g) |
| Sugar | 10 (g) | 10 (g) | 10 (g) |
| Fructose | 5 (g) | 5 (g) | 5 (g) |
| Milk powder | 20 (g) | 20 (g) | 20 (g) |
| Onion powder | 1.6 (g) | 1.6 (g) | 1.6 (g) |
| Garlic powder | 0.1 (g) | 0.1 (g) | 0.1 (g) |
| Carrot Powder | 0.1 (g) | 0.1 (g) | 0.1 (g) |
| MSG | 3.3 (g) | 3.3 (g) | 3.3 (g) |
| Yeast Extract | 1 (g) | 1 (g) | 1 (g) |
| Salt | 7 (g) | 3.5 (g) | 3.5 (g) |
| Maltodextrin | | 3.5 (g) | |
| Product as prepared in example 3 (N-gluconyl ethanolamine phosphate) | | | 3.5(g) |
| Total | 100 (g) | 100 (g) | 100 (g) |

10 gram of each composition was mixed with 100 ml hot water to obtain tomato soups. The different soups were tasted and evaluated by a sensory panel. Product C, comprising N-gluconyl ethanolamine phosphate, was clearly preferred over product B (50 % salt reduction). Despite the reduced salt content of product C, the perceived saltiness of the product was comparable to that of product A. Furthermore, the taste of product C was described as having "more taste", "more impact", "more umami", "more kokumi" and "salivating".

### Example 10

Six sweet milk samples, containing 6 % sucrose, flavoured with a strawberry flavour were prepared:
1. Zero fat containing milk drink
2. Zero fat containing milk drink + 10 ppm gluconyl ethanolamine (as prepared in example 2)
3.1.5 % fat milk
4.1.5 % fat milk + 10 ppm gluconyl ethanolamine (as prepared in example 2)
5. Full fat milk
6. Full fat milk + 10 ppm gluconyl ethanolamine (as prepared in example 2)

All samples were tasted by a professional panel. There was general agreement about the differences in taste between the samples. Samples 2, 4 and 6 were described as fuller, more round natural taste, more creamy and more sweet than sample 1, 3 and 5 respectively. When samples 2 and 3 and samples 4 and 5 were compared with each other, it was concluded that they tasted quite similar and the main difference was that sample 2 and 4 were slightly more sweet than sample 3 and 5 respectively.

### Example 11

Four samples of standard instant vegetable soup were prepared:
1. Soup containing 2 % fat
2. Soup containing 2 % fat + 7 ppm gluconyl ethanolamine (as prepared in example 2)
3. Soup containing 4 % fat
4. Soup containing 4 % fat + 7 ppm gluconyl ethanolamine (as prepared in example 2)
5. Soup containing 6 % fat
6. Soup containing 6 % fat + 7 ppm gluconyl ethanolamine (as prepared in example 2)

All samples were tasted by a professional panel. There was general agreement about the differences in taste between the samples. When sample 2, 4 and 6 were compared with sample 1, 3 and 5 respectively they tasted more fatty, more natural, more round and more sweet. When sample 2 and 3 and samples 4 and 5 were compared they tasted quite similar and the main difference was that sample 2 and 4 tasted slightly more sweet.

### Example 12

The following mixtures were used as casings to improve the tobacco taste and improvement of the body of the smoke:
A:

| | |
|---|---|
| Carob extract | 20 g |
| Licorice extract | 15 g |
| Prune extract | 10 g |
| cocoa extract | 10 g |
| water | 45 g |

dosage of this mixture is 1g/ kg tobacco
B:

| | |
|---|---|
| Carob extract | 20 g |
| Licorice extract | 15 g |
| Prune extract | 10 g |
| cocoa extract | 10 g |
| Gluconyl Ethanolamine (as prepared in example 2) | 2 g |
| water | 43 g |

dosage of this mixture is 1 g/kg tobacco

Cigarettes were prepared from both types of tobacco, which were evaluated by a professional panel. Cigarettes prepared with casing B differed from those prepared with casing A in that they exhibited significantly more "body" in the smoke and significantly more "expanding" tobacco smoke.

### Example 13

One sample of potato chips was seasoned with salt (0.7 %).

Another sample of potato chips was seasoned with salt (0.7 %) and flavoured with 100 ppm N-gluconyl ethanolamine (as prepared in example 2).

The chips were tasted by a professional panel.

The reference chips were described as salty, slightly rancid, oily-greasy and cardboard-like. The chips containing N-gluconyl ethanolamine were described as salty, exhibiting more fatty fullness, and masking of undesired notes of the reference chips.

### Example 14

Ketchup was prepared using 506 g of water, 150 g of tomato puree (28 - 30 Brix), 30 g of modified starch (Colflo 67 ex National Starch), 22 g of salt, 2 g of stabilizer (Deltagel CE 1364) and 115 g of vinegar (12 % acetic acid in water), by first mixing the dry ingredients, subsequently adding water and stirring until a homogeneous paste was obtained. Tomato puree and vinegar were than added and the mixture was stirred again and heated to a temperature of 95 °C for 1 minute. The mixture was filled off hot and allowed to cool down. The pH was determined to be 3.5.

Part of the ketchup was mixed with 20 ppm N-gluconyl ethanolamine (as prepared in example 2).

The two ketchups were tasted and compared by a professional panel.

The ketchup base was described as strongly acidic, acetic acid-like, with a flat tomato profile. The ketchup containing 20 ppm N-gluconyl ethanolamine was described as mildly acidic, less acetic acid-like, exhibiting more sun-ripened tomato character, more fullness.

### Example 15

A vinaigrette was prepared using 815.8 g of water, 100 g of sunflower oil, 12 g of salt, 30 g of sugar, 45 g of vinegar (12 % acetic acid), 4 g of xanthan gum and 0.2 g of turmeric powder by mixing all ingredients intensively to obtain a homogeneous emulsion.

To a part of the vinaigrette 30 ppm of N-gluconyl ethanolamine (as prepared in example 2) was added.

Both vinaigrettes were tasted by a professional panel.

The original vinaigrette was described as strongly acidic, acetic acid-like, thin, peaky.

The vinaigrette containing the N-gluconyl ethanolamine was described as acidic, more rounded, more full, more fat impression, more smooth.

## Claims

1. Flavour composition comprising:
a. at least 0.1 wt.% of one or more flavouring substances, optionally including saccharide sweetener in an amount of 0-20% by weight of the composition and/or artificial sweetener in an amount of 0-3 % by weight of the composition; and
b. between 0.001 and 95 wt.% of one or more taste improving substances selected from the group consisting of:
substances according to formula (I):
(I) CH₂OH-(CHOH)₄-CO-NH-CH₂-CH₂-X
wherein X represents -OH, -O(CO)R, -OPO₃H₂, -PO₃H₂, -OSO₃H or -SO₃H, and R represents a C₂-C₁₀ group comprising at least one carboxylic acid group; and edible salts thereof,
wherein, in case the flavour composition contains N-gluconyl ethanolamine or a salt thereof, the weight ratio of the taste improving substances and the flavouring substances is less than 50:1

2. Flavour composition according to any of the preceding claims wherein the weight ratio of the taste improving substances and the flavouring substances is within the range of 1:100 to 10:1.

3. Flavour composition according to any of the preceding claims, wherein, in the case the composition contains N-gluconyl ethanolamine and artificial sweetener, the weight ratio of N-gluconyl ethanolamine and artificial sweetener is less than 50:1, preferably less than 20:1.

4. Flavour composition according to any one of the preceding claims comprising the taste improving substances in an amount of 0.01-90 wt.%, preferably of 0.1-25 wt.%.

5. Flavour composition according to any one of the preceding claims comprising 1-95 wt.% of flavouring substances.

6. Flavour composition according to any one of the preceding claims, wherein X represents -OH, -OPO₃H₂, -PO₃H₂, -OSO₃H or -SO₃H.

7. Substance according to formula (I):
(I) CH₂OH-(CHOH)₄-CO-NH-CH₂CH₂-X
wherein X represents -O(CO)R, -OPO₃H₂, -PO₃H₂, -OSO₃H or
-SO₃H, and R represents a C₂-C₁₀ group comprising at least one carboxylic acid group; and edible salts thereof.

8. Substance according to claim 7, wherein X represents -OPO₃H₂, -PO₃H₂, -OSO₃H or-SO₃H.

9. Substance according to claim 8, wherein the substance is N-gluconyl ethanolamine phosphate or an edible salt thereof

10. Use of one or more taste improving substances as defined in claim 7 for improving the taste of foodstuffs, beverages, pharmaceutics, tobacco products or oral care products.

11. Process of improving the taste of a foodstuff, a beverage, a pharmaceutical product, a tobacco product or an oral care product, comprising adding to said product one or more taste improving substances selected from the group consisting of substances according to formula (I) as defined in claim 1 and edible salts thereof, in an amount of between 0.1-10,000 ppm, preferably 1-5,000 ppm.

12. A product selected from the group consisting of foodstuffs, beverages, pharmaceutics, tobacco products, and oral care products comprising one or more taste improving substances as defined in claim 1 in an amount of between 0.1-10,000 ppm, preferably 1-5,000 ppm.

13. Product according to claim 12 further containing one or more flavouring substances in an amount of 5-20,000 ppm, wherein the weight ratio of the taste improving substance and the flavouring substance is less than 50:1.

14. Product according to claim 12 or 13 containing added sweetener, wherein, in case the product contains N-gluconyl ethanolamine or a salt thereof, the weight ratio of the taste improving substances and saccharide sweetener does not exceed 1:1 and the weight ratio of the taste improving substances and artificial sweetener is less than 50:1.

## Patentansprüche

1. Geschmackszusammensetzung, umfassend:
a. mindestens 0,1 1 Ges.-% eines oder mehrerer Geschmacksstoffe, gegebenenfalls einschließlich Saccharid-Süßstoff in einer Menge von 0-20 Gew.-% der Zusammensetzung und/oder künstlichem Süßstoff in einer Menge von 0-3 Gew.-% der Zusammensetzung; und
b. zwischen 0,001 und 95 Ges.-% einer oder mehrerer geschmacksverbessernder Stoffe aus der Gruppe bestehend aus:
Stoffen gemäß Formel (I):
(I) CH₂OH-(CHOH)₄-CO-NH-CH₂-CH₂-X
wobei X für -OH, -O(CO)R, -OPO₃H₂, -PO₃H₂, -OSO₃H oder -SO₃H steht und R für eine C₂-C₁₀Gruppe mit mindestens einer Carbonsäuregruppe steht;
und essbaren Salzen davon,
wobei dann, wenn die Geschmackszusammensetzung N-Gluconylethanolamin oder ein Salz davon enthält, das Gewichtsverhältnis der geschmacksverbessernden Stoffe und der Geschmacksstoffe weniger als 50:1 beträgt.

2. Geschmackszusammensetzung nach einem der vorhergehenden Ansprüche, wobei das Gewichtsverhältnis der geschmacksverbessernden Stoffe und der Geschmacksstoffe im Bereich von 1:100 bis 10:1 liegt.

3. Geschmackszusammensetzung nach einem der vorhergehenden Ansprüche, wobei dann, wenn die Zusammensetzung N-Gluconylethanolamin und künstlichen Süßstoff enthält, das Gewichtsverhältnis von N-Gluconylethanolamin und künstlichem Süßstoff weniger als 50:1, vorzugsweise weniger als 20:1, beträgt.

4. Geschmackszusammensetzung nach einem der vorhergehenden Ansprüche, die die geschmacksverbessernen Stoffe in einer Menge von 0,01-90 Gew.-%, vorzugsweise 0,1-25 Gew.-%, umfasst.

5. Geschmackszusammensetzung nach einem der vorhergehenden Ansprüche, die 1-95 Gew.-% Geschmacksstoffe umfasst.

6. Geschmackszusammensetzung nach einem der vorhergehenden Ansprüche, wobei X für -OH, -OPO₃H₂, -PO₃H₂, -OSO₃H oder -SO₃H steht.

7. Stoff der Formel (I):
(I) CH₂OH-(CHOH)₄-CO-NH-CH₂-CH₂-X
wobei X für -O (CO) R, -OPO₃H₂, -PO₃H₂, -OSO₃H oder -SO₃H steht und R für eine C₂-C₁₀-Gruppe mit mindestens einer Carbonsäuregruppe steht;
und essbare Salze davon.

8. Stoff nach Anspruch 7, wobei X für -OPO₃H₂, -PO₃H₂, -OSO₃H oder -SO₃H steht.

9. Stoff nach Anspruch 8, wobei es sich bei dem Stoff um N-Gluconylethanolaminphosphat oder ein essbares Salz davon handelt.

10. Verwendung einer oder mehrerer geschmacksverbessernder Stoffe gemäß Anspruch 7 zur Verbesserung des Geschmacks von Lebensmitteln, Getränken, Pharmazeutika, Tabakprodukten oder Mundpflegeprodukten.

11. Verfahren zur Verbesserung des Geschmacks eines Lebensmittels, eines Getränks, eines pharmazeutischen Produkts, eines Tabakprodukts oder eines Mundpflegeprodukts, bei dem man dem Produkt einen oder mehrere geschmacksverbessernde Stoffe aus der Gruppe bestehend aus Stoffen nach Formel (I) gemäß Anspruch 1 und essbaren Salzen davon in einer Menge zwischen 0,1-10.000 ppm, vorzugsweise 1-5000 ppm, zugibt.

12. Produkt, ausgewählt aus der Gruppe bestehend aus Lebensmitteln, Getränken, Pharmazeutika, Tabakprodukten und Mundpflegeprodukten, umfassend einen oder mehrere geschmacksverbessernde Stoffe gemäß Anspruch 1 in einer Menge zwischen 0,1-10.000 ppm, vorzugsweise 1-5000 ppm.

13. Produkt nach Anspruch 12, das ferner einen oder mehrere Geschmacksstoffe in einer Menge von 5-20.000 ppm enthält, wobei das Gewichtsverhältnis von geschmacksverbesserndem Stoff und Geschmacksstoff weniger als 50:1 beträgt.

14. Produkt nach Anspruch 12 oder 13, das zugesetzten Süßstoff enthält, wobei dann, wenn das Produkt N-Gluconylethanolamin oder ein Salz davon enthält, das Gewichtsverhältnis von geschmacksverbessernden Stoffen und Saccharid-Süßstoff nicht mehr als 1:1 beträgt und das Gewichtsverhältnis von geschmacksverbessernden Stoffen und künstlichem Süßstoff weniger als 50:1 beträgt.

## Revendications

1. Composition d'arôme, comprenant :
a. au moins 0,1% en poids d'une ou plusieurs substances aromatisantes, comportant éventuellement un édulcorant saccharidique selon une quantité de 0-20% en poids de la composition et/ou un édulcorant artificiel selon une quantité de 0-3% en poids de la composition, et
b. entre 0,001 et 95% en poids d'une ou plusieurs substances d'amélioration du goût choisies dans le groupe constitué par :
des substances répondant à la formule (I) :
(I) CH₂OH-(CHOH)₄-CO-NH-CH₂-CH₂-X
où X représente -OH, -O(CO)R, -OPO₃H₂, -PO₃H₂, -OSO₃H ou -SO₃H, et R représente un groupement en C₂-C₁₀ comprenant au moins un groupement acide carboxylique ;
et les sels comestibles de celles-ci,
où, dans le cas où la composition d'arôme contient de la N-gluconyléthanolamine ou un sel de celle-ci, le rapport pondéral des substances d'amélioration du goût et des substances aromatisantes est inférieur à 50:1.

2. Composition d'arôme selon l'une quelconque des revendications précédentes, dans laquelle le rapport pondéral des substances d'amélioration du goût et des substances aromatisantes se trouve dans la plage allant de 1:100 à 10:1.

3. Composition d'arôme selon l'une quelconque des revendications précédentes, où, dans le cas où la composition contient de la N-gluconyléthanolamine et un édulcorant artificiel, le rapport pondéral de la N-gluconyléthanolamine et de l'édulcorant artificiel est inférieur à 50:1, préférablement inférieur à 20:1.

4. Composition d'arôme selon l'une quelconque des revendications précédentes, comprenant les substances d'amélioration du goût selon une quantité de 0,01-90% en poids, préférablement de 0,1-25% en poids.

5. Composition d'arôme selon l'une quelconque des revendications précédentes, comprenant 1-95% en poids de substances aromatisantes.

6. Composition d'arôme selon l'une quelconque des revendications précédentes, dans laquelle X représente -OH, -OPO₃H₂, -PO₃H₂, -OSO₃H ou -SO₃H.

7. Substance répondant à la formule (I)
(I) CH₂OH-(CHOH)₄-CO-NH-CH₂-CH₂-X
où X représente -O(CO)R, -OPO₃H₂, -PO₃H₂, -OSO₃H ou -SO₃H, et R représente un groupement en C₂-C₁₀ comprenant au moins un groupement acide carboxylique ;
et les sels comestibles de celle-ci.

8. Substance selon la revendication 7, dans laquelle X représente -OPO₃H₂, -PO₃H₂, -OSO₃H ou -SO₃H.

9. Substance selon la revendication 8, où la substance est le phosphate de N-gluconyléthanolamine ou un sel comestible de celui-ci.

10. Utilisation d'une ou plusieurs substances d'amélioration du goût telles que définies selon la revendication 7, pour l'amélioration du goût de produits alimentaires, de boissons, de produits pharmaceutiques, de produits de tabac ou de produits de soin oral.

11. Procédé d'amélioration du goût d'un produit alimentaire, d'une boisson, d'un produit pharmaceutique, d'un produit de tabac ou d'un produit de soin oral, comprenant l'addition audit produit d'une ou plusieurs substances d'amélioration du goût choisies dans le groupe constitué par les substances selon la formule (I) telles que définies selon la revendication 1 et des sels de celles-ci, selon une quantité de 0,1-10 000 ppm, préférablement de 1-5000 ppm.

12. Produit choisi dans le groupe constitué par les produits alimentaires, les boissons, les produits pharmaceutiques, les produits de tabac et les produits de soin oral, comprenant une ou plusieurs substances d'amélioration du goût telles que définies selon la revendication 1, selon une quantité de 0,1-10 000 ppm, préférablement de 1-5000 ppm.

13. Produit selon la revendication 12, contenant en outre une ou plusieurs substances aromatisantes selon une quantité de 5-20 000 ppm, où le rapport pondéral de la substance d'amélioration du goût et de la substance aromatisante est inférieur à 50:1.

14. Produit selon la revendication 12 ou 13 contenant un édulcorant ajouté, où, dans le cas où le produit contient de la N-gluconyléthanolamine ou un sel de celle-ci, le rapport pondéral des substances d'amélioration du goût et de l'édulcorant saccharidique n'excède pas 1:1 et le rapport pondéral des substances d'amélioration du goût et de l'édulcorant artificiel est inférieur à 50:1.
